# EUROPÄISCHE PATENTSCHRIFT

(11) **EP 1 340 709 B1**
(45) Veröffentlichungstag und Bekanntmachung des Hinweises auf die Patenterteilung: **06.04.2005**
(21) Anmeldenummer: 02025922.2
(22) Anmeldetag: 20.11.2002
(51) Int. Cl.: B66F 7/06, B62D 65/00

(54) **Transportanlage zum Transport von Bauteilen**
Transport unit for transporting structurial elements
Installation de transport pour transporter des éléments de structure

(30) Priorität: 03.07.2002 EP 02014709
(43) Veröffentlichungstag der Anmeldung: 03.09.2003
(60) Teilanmeldung: 03028343.6
(73) Patentinhaber: TMS Produktionssysteme GmbH, 4031 Linz (AT)
(72) Erfinder: Weiss, Lothar, 4050 Traun (AT)
(74) Vertreter: VA TECH Patente GmbH & Co

(56) Entgegenhaltungen:
- DE-A- 19 518 618
- DE-A- 19 957 468
- US-A- 2 766 007
- US-A- 5 013 203
- US-A- 5 088 176

## Beschreibung

Die vorliegende Erfindung betrifft eine Transportanlage zum Transport von Bauteilen, vorzugsweise Fahrzeugkarosserien, zwischen einer Mehrzahl von Stationen, vorzugsweise Fertigungsstationen, entlang einer Transportstrecke, entlang der mit einer Mehrzahl von Transportfahrzeugen eine Mehrzahl von Bauteilen transportierbar sind, wobei die Transportfahrzeuge zumindest eine Bewegungseinheit, zumindest eine Aufnahmeeinrichtung zur Aufnahme der Bauteile und zumindest eine Heb- bzw. Senkeinrichtung zum Heben und/oder Senken der Aufnahmeeinrichtung, bestehend aus zumindest einem Hubantrieb und zumindest zwei im Wesentlichen starrer, vorzugsweise langgestreckter, Konstruktionselemente, die durch zumindest ein Gelenk miteinander verbunden sind, aufweisen, wobei zumindest ein erstes und ein zweites Konstruktionselement der Heb- bzw. Senkeinrichtung zumindest in einer Hubposition Y-förmig angeordnet sind.

Transportfahrzeuge mit einer Heb- bzw. Senkeinrichtung zum Heben und/oder Senken der Aufnahmeeinrichtung, die die Bauteile trägt sind in unterschiedlichsten Ausführungen bekannt.
Solche Transportfahrzeuge verwenden oftmals sogenannte Scherenmechanismen als Hub- bzw. Senkeinrichtung. Diese gibt es sowohl am Boden fahrend, als auch als Hängetisch an einem Transportfahrzeug, welches auf einem, an der Decke geführten, Schienensystem läuft. Aus der EP 1 106 563 A1 ist beispielsweise ein solches Transportfahrzeug bekannt, wobei die Heb- bzw. Senkeinrichtung als Seilscherenmechanismus ausgeführt ist, die aufwendige Seilführungen und zum Teil erhebliche Seillängen benötigen. Darüber hinaus ist die Stabilität gegenüber dem ungewollten seitlichen Ausweichen der Aufnahmeeinrichtung nicht in allen Fällen ausreichend. Zusätzlich benötigen diese Transportfahrzeuge aus konstruktiven Gründen eine Plattform mit entsprechender Größe die die Zugänglichkeit zum Transportgut erschwert. Eine Ausführung eines solchen X-förmigen Scherenmechanismus mit starren Elementen ist der US 5,013,203 A zu entnehmen. Eine solche Hebeinrichtung weist jedoch eine große Baugröße auf, ist daher schwer und unhandlich.
Andere bekannte Transportfahrzeuge werden z.B. mit Teleskopsäulen, also mehrere ineinander geschobene Teleskoparme, als Heb- bzw. Senkeinrichtungen ausgeführt, wie z.B. aus der AT 399 306 B bekannt. Im eingefahrenen Zustand der Teleskopsäule ist eine gewisse Mindestbauhöhe erforderlich, abhängig vom Hub und der Überdeckung der Teleskoparme. Ist diese nicht akzeptabel, ist eine größere Anzahl von ausschiebbaren Teleskoparmen erforderlich, was die Einrichtung verteuert. Aus Gründen der Zugänglichkeit für entsprechende Bearbeitungen befindet sich die Last meistens seitlich neben der Teleskopsäule und übt damit ein Biegemoment auf die Säule aus. Diese Lösung hat dadurch den Nachteil, dass bei Be- und Entlastung das Ende des Teileträgers durch die Biegung der vertikalen Säule und durch die unvermeidliche elastische Verformung der Bauteile nicht nur unterschiedlich geneigt wird, sondern auch horizontal verschoben wird, wodurch eine exakte Positionierung erschwert wird. Ähnliche Konstruktionen mit einer Hebeinrichtung mit säulenartigen Elementen sind der US 5,088,176 A und der DE 195 18 618 A1 zu entnehmen.
Eine andere Möglichkeit zeigt die DE 199 57 468 A1, bei der ein Transportfahrzeug mit einer Hebeeinrichtung angegeben wird, bei der mehrere schwenkbar verbundene Elemente in Führungen geführt werden und während des Hebevorganges zusammen- oder auseinanderklappen und somit der Bauteil gehoben bzw. gesenkt werden kann. Eine solche Vorrichtung hat jedoch den Nachteil einer sehr komplexen, aufwendigen und damit teuren Kinematik und Konstruktion.
Aus dem Stand der Technik sind auch weitere Heb- und Senkeinrichtungen bekannt. Z.B. zeigen die US 2,766,007 und die US 2,785,807 je eine Heb- bzw. Senkeinrichtung mit Y-förmigen Konstruktionselementen. Die Hubantriebe dieser Heb- bzw. Senkeinrichtungen greifen allerdings so an den Konstruktionselementen an, dass ein Großteil der Gewichtskraft der zu hebenden Last von den Konstruktionselementen der Heb- bzw. Senkeinrichtung aufgenommen werden muss. Deshalb müssen die Konstruktionselemente der Heb- bzw. Senkeinrichtung massiv dimensioniert werden, wodurch das Gesamtgewicht der Einheit erheblich vergrößert wird. Für ein Transportfahrzeug einer Transportanlage, für das möglichst geringe Eigengewichte gefordert werden, ist die Verwendung solcher Heb- bzw. Senkeinrichtungen daher nicht erwünscht.

Die gegenständliche Erfindung hat sich deshalb die Aufgabe gestellt, ein Transportfahrzeug einer Transportanlage mit einer Hub- bzw. Senkeinrichtung anzugeben, das einfach, leicht und kompakt aufgebaut ist und einfach und kostengünstig hergestellt werden kann.

Diese Aufgabe wird erfindungsgemäß dadurch gelöst, dass je ein erstes Ende der zwei Konstruktionselemente durch ein zweites und drittes Gelenk mit der Bewegungseinheit verbunden ist, das zweite Ende des ersten Konstruktionselements durch ein viertes Gelenk mit der Aufnahmeeinrichtung verbunden ist, das zweite Ende des zweiten Konstruktionselements zwischen den beiden Enden des ersten Konstruktionselements an diesem durch das erste Gelenk drehbar gelagert angeordnet ist, das erste Ende eines der zwei Konstruktionselemente in einer Führungseinrichtung geführt bewegbar und drehbar angeordnet ist und dass der Hubangriffspunkt des Hubantriebes an der Aufnahmeeinrichtung oder in der Nähe eines Anlenkpunktes der Aufnahmeeinrichtung an einem mit der Aufnahmeeinrichtung verbundenen Konstruktionselement angreift.

Damit erzielt man zum Einen einen besonders einfachen und kompakten Aufbau des Transportfahrzeuges. Durch die geringe erforderliche Anzahl an Konstruktionselementen kann ein solches Transportfahrzeug auch sehr einfach und günstig hergestellt werden und der zu transportierende Bauteil ist immer frei zugänglich, da in keiner Hubposition ein Konstruktionselement den Zugang zum Bauteil versperrt.
Zum Anderen wird durch den besonderen Angriffspunkt des Hubantriebes sichergestellt, dass ein Großteil der Gewichtskraft des Bauteils vom Hubantrieb aufgenommen wird und nicht über die Konstruktionselemente der Heb- bzw. Senkeinrichtung aufgenommen und übertragen werden muss. Die Heb- bzw. Senkeinrichtung muss somit nur mehr eine Führungsfunktion erfüllen. Dadurch können die Konstruktionselemente sehr klein dimensioniert werden, wodurch das Transportfahrzeug sehr leicht und kompakt wird.

Vorteilhaft wird zumindest ein Konstruktionselement in einer Führungseinrichtung geführt bewegbar angeordnet, wobei die Führungseinrichtung an der Bewegungseinheit angeordnet ist, wodurch die Hubbewegung mit sehr einfachen konstruktiven Mitteln erzielt werden kann.

Eine Ausführung einer Hub- und Senkeinrichtung mit einem langen und einem kurzen Konstruktionselement, wobei das längere in der Führungseinrichtung geführt wird ist besonders einfach aufgebaut und kann sehr einfach hergestellt werden.

Ist das lange Konstruktionselement das geführte und auch noch doppelt so lange wie das kurze und ist das kurze in der Mitte des langen gelenkig gelagert, ergibt sich eine ausgesprochen vorteilhafte Ausführung eines Transportfahrzeuges, da dann sichergestellt ist, dass die Aufnahmeeinrichtung rein vertikal bewegt wird, wodurch eine einfache Positionierung der Aufnahmeeinrichtung ermöglicht wird.

Bei beliebigen Längenverhältnissen der Konstruktionselemente ist es besonders vorteilhaft, die Führungseinrichtung derart auszuführen, dass durch die Kinematik der Heb- bzw. Senkeinrichtung das mit der Aufnahmeeinrichtung verbundene Ende des Führungselementes im Wesentlichen vertikal bewegt wird. Durch diese besondere Gestaltung der Führungseinrichtungen kann eine horizontale Bewegung der Aufnahmeeinrichtung ausgeglichen werden, wodurch wiederum eine einfache Positionierung der Aufnahmeeinrichtung ermöglicht wird.

Bei einer Ausgestaltung der Hub- bzw. Senkeinrichtung mit zwei miteinander verbundenen mehrgliedrigen Gelenkrahmen und einem Führungselement, wobei die Gelenkrahmen vorzugsweise als Parallelogramm ausgeführt sind, ergeben sich ganz besondere Vorteile. Aufgrund der Kinematik einer solchen Vorrichtung wird nämlich sichergestellt, dass die Aufnahmeeinrichtung in allen Hebepositionen ihre ursprüngliche Lage bzgl. der Horizontalen beibehält und durch die Hubbewegung nicht verschwenkt wird.
Bei einem Längenverhältnis zwischen Führungselement und einem Konstruktionselement der Gelenkrahmen von 2:1 und einer gelenkigen Verbindung zwischen Gelenkrahmen und Führungselement in der Mitte des Führungselementes wird außerdem eine rein vertikale Bewegung der Aufnahmeeinrichtung gewährleistet.

Eine ganz besonders einfache Ausgestaltung ergibt sich, wenn die Heb- bzw. Senkeinrichtung mit zumindest einen mehrgliedrigen Gelenkrahmen, bestehend aus einer Anzahl gelenkig miteinander verbundener Konstruktionselemente, und einem Führungselement ausgeführt ist, wobei vorzugsweise das Führungselement gelenkig mit dem Gelenksrahmen verbunden ist. Bei dieser Ausgestaltung reicht ein Gelenkrahmen und ein Führungselement aus, um die erwünschte geführte Hubbewegung zu erzielen, dazu ist lediglich eine zweite Führungseinrichtung erforderlich, wodurch sich eine besonders einfache und günstige Konstruktion ergibt.

Die Konstruktionselemente, das Verbindungselement und/oder das Führungselement werden vorteilhaft aus Standardbauteilen, wie Rohren, Formrohren, oder Profilen, zumindest teilweise als Stäbe ausgeführt, was die Konstruktion wesentlich vereinfacht.

Vorteilhaft ist die Führungseinrichtung eine lineare Führung und an der Bewegungseinheit angeordnet, was die Auslegung der Kinematik und die Herstellung der Hub- bzw. Senkeinrichtung vereinfacht.

Die erzielbare Hubhöhe der Heb- bzw. Senkeinrichtung des Transportfahrzeuges kann sehr einfach vergrößert werden, wenn die Heb- bzw. Senkeinrichtung zweiteilig aufgebaut wird, wobei ein Teil als Scherenmechanismus aufgebaut ist und der zweite Teil mit Y-förmigen Konstruktionselementen ausgebildet ist. Dadurch erhält man den Vorteil einer erweiterten Hubhöhe bei gleicher Baulänge im eingefahrenen Zustand.

Der Hubantrieb kann je nach Bedarf als Seilantrieb, Kettenantrieb, Gewindestangenantrieb, Hydraulikzylinder oder Pneumatikzylinder ausgeführt sein.

In Fällen in denen besonders schwere Bauteile transportiert werden müssen, oder aus Platzgründen könnte in Transportrichtung zu beiden Seiten des Transportfahrzeuges zumindest je eine Hub- und Senkeinrichtung angeordnet sein.

Ein erfindungsgemäßes Transportfahrzeug lässt sich besonders vorteilhaft in einer Transportanlage zum Transport von Bauteilen, vorzugsweise Fahrzeugkarosserien, zwischen einer Mehrzahl von Stationen, vorzugsweise Fertigungsstationen, entlang einer Transportstrecke, entlang der mit einer Mehrzahl von Transportfahrzeugen eine Mehrzahl von Bauteilen transportierbar sind, einsetzen.

Eine solche Transportanlage kann als Hängebahn, vorzugsweise eine Elektrohängebahn, und das Transportfahrzeug als Hängebahnfahrzeug ausgeführt sein.
Bei einer solchen Anwendung können die Vorteile in ihrer Gesamtheit genutzt werden. Es wird eine gute Zugänglichkeit an das Transportgut von oben gefordert, dazu kann die Aufnahmeeinrichtung hakenförmig ausgebildet werden. Die gute Zugänglichkeit für Schweißoder Montageoperationen ergibt sich auch dadurch, dass entsprechend der Anlagenfunktion in den Montagebereichen die Last abgesenkt wird und damit aufgrund der Kinematik die Konstruktionselemente der Hub- bzw. Senkeinrichtung einem Manipulator nicht im Weg stehen. Lediglich in gehobener Stellung liegt sie quer über der Last, was keinen Nachteil darstellt, weil in dieser Stellung nur Transportaufgaben durchgeführt werden. Besonders beim nachträglichen Einbau des Transportmittels in bestehende Hallen ist die sich ergebende geringe Bauhöhe von großem Vorteil.
Ebenso ist gerade bei Hängebahnen ein geringes Eigengewicht von großer Bedeutung. Durch die Tatsache, dass bei der hängenden Anordnung ein flexibles Zugmittel zur Erbringung der Hubkraft eingesetzt werden kann, beispielsweise ein Seil, ein Gurt oder eine Kette an einer Winde oder ähnlichem, ergibt sich hier die Möglichkeit einer besonders kompakten und leichten Ausführung.

Eine weitere sehr günstige Anwendung ist eine bodengebundene Transportanlage mit einem bodengebundenen Transportfahrzeug, wobei sich im Wesentlichen die gleichen Vorteile wie oben ergeben.

Um eine Positionsgenaue Bearbeitung in einer Station, z.B. eine Schweißstation, sicherzustellen, ist die Aufnahmeeinrichtung bzw. der Bauteil vorteilhaft in einer Übergabeposition durch die Heb- bzw. Senkeinrichtung übergeb- bzw. übernehmbar, wobei in der Übergabeposition und/oder an der Aufnahmeeinrichtung bzw. am Bauteil zur Positionsbestimmung der Aufnahmeeinrichtung bzw. des Bauteils in der Station zumindest eine Zentriereinrichtung vorgesehen ist. Dadurch kann bereits durch die Hub- bzw. Senkbewegung die Position der Bauteile in der Station bestimmt werden, wodurch eine solche Transportanlage sehr einfach ausgeführt werden kann.
Dazu kann die Aufnahmeeinrichtung mit dem Bauteil zur Übergabe entweder vertikal, oder alternativ je nach Bedarf auch schräg oder kurvenförmig gehoben oder gesenkt werden.

Die gegenständliche Erfindung wird im folgenden anhand der beispielhaften, nicht einschränkenden, spezielle Ausführungsbeispiele zeigenden Figuren 1 bis 6 beschrieben. Dabei zeigt
Fig. 1 eine vorteilhafte Ausführung eines erfindungsgemäßen Transportfahrzeuges,
Fig. 2 bis 5 weitere vorteilhafte Ausführungen eines erfindungsgemäßen Transportfahrzeuges,
Fig. 6 und 7 je eine Ausgestaltung eines Transportfahrzeuges als Fahrzeug einer Elektrohängebahn und
Fig. 8 eine Ausgestaltung eines Transportfahrzeuges als bodengebundenes Fahrzeug.

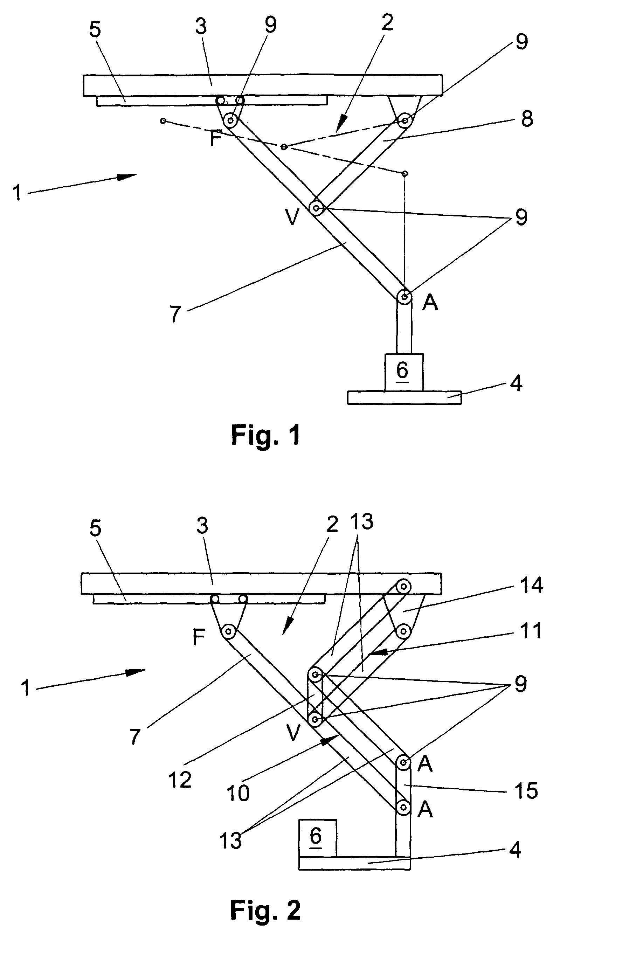

In Fig. 1 ist eine sehr einfache Ausgestaltung eines erfindungsgemäßen Transportfahrzeuges 1 dargestellt. Das Transportfahrzeuges 1 besteht dabei im Wesentlichen aus einer Bewegungseinheit 3, die in der Regel mit hinlänglich bekannten, hier nicht dargestellten Einrichtungen zum Bewegen des Transportfahrzeuges 1, wie Räder, Rollen, Antriebe, Steuereinheiten, etc., ausgestattet ist, einer Hub- und Senkeinrichtung 2 und einer daran befestigten Aufnahmeeinrichtung 4 zur Aufnahme beliebiger Bauteile 6.
Die Hub- und Senkeinrichtung 2 besteht in diesem speziellen Beispiel aus zwei Konstruktionselementen 7, 8, hier stabförmig, die über Gelenke 9 drehbar miteinander verbunden sind. Der längere Stab ist hier als Führungselement 7 ausgeführt, dessen einer Führungseinrichtung 5 zugeordnetes Ende in dieser Führungseinrichtung 5 geführt bewegbar und drehbar gelagert ist. Dieses Ende des Führungselementes 7 ist über ein weiteres Gelenk 9 drehbar mit einem Element der Führungseinrichtung 5 verbunden und kann daher ausschließlich entlang einer durch die Führungseinrichtung 5 vorgegebenen Kurve bewegt werden, in diesem speziellen Beispiel eine lineare Führung. Das entgegengesetzte Ende des Führungselementes 7 ist am Anlenkpunkt A mit der Aufnahmeeinrichtung 4 verbunden. Der kurze Stab 8 der Hub- und Senkeinrichtung 2 ist mit einem Ende über ein Gelenk 9 an der Bewegungseinheit 3 drehbar gelagert und mit dem anderen Ende wiederum über ein Gelenk 9 zwischen den beiden Enden des Führungselementes 7 am Führungselement 7 drehbar gelagert. In einer gehobenen bzw. gesenkten Position sind die Konstruktionselemente hier also immer Y-förmig angeordnet.
Die Längen des Stabes 8 und des Führungselementes 7 sind im Beispiel nach Fig. 1 so gewählt, dass das Führungselement 7 doppelt so lang ist, wie die Länge des kurzen Stabes 8 und der Verbindungspunkt V zwischen Führungselement 7 und dem kurzen Stab 8 ist in der Mitte des Führungselementes 7 gewählt. Aus dieser speziellen Gestaltung ergeben sich besondere kinematische Vorteile. Wie man sich kinematisch leicht überlegen kann, wird die Aufnahmeeinrichtung 4 bei dieser Anordnung bei einer Verschiebung des Führungspunktes F entlang der Führungseinrichtung 5 im Wesentlichen senkrecht gehoben oder abgesenkt und es kommt zu keiner horizontalen Verschiebung der Aufnahmeeinrichtung 4, wie durch die strichlierte Linie in Fig. 1 angedeutet wird.
Bei einer starren Verbindung zwischen Führungselement 7 und Aufnahmeeinrichtung 4 würde sich lediglich die Aufnahmeeinrichtung 4 verschwenken, maximal um 90°. Diese Verschwenkung könnte man entweder als gegeben hinnehmen, oder man könnte auch einen gewissen Ausgleich der Lage der Aufnahmeeinrichtung 4 vorsehen. Z.B. könnten man eine drehbare Verbindung zwischen Führungselement 7 und Aufnahmeeinrichtung 4 am Anlenkpunkt A vorsehen und die Verschwenkung durch eine geeignete Vorrichtung, wie z.B. ein Schrittmotor, Balancegewichte, oder ähnliches, ausgleichen, sodass immer eine erwünschte Lage, z.B. eine horizontale Lage, der Aufnahmeeinrichtung 4 gewährleistet ist. Bei einer gelenkigen Verbindung zwischen Führungselement 7 und Aufnahmeeinrichtung 4, wie in Fig. 1 dargestellt, würde sich die Aufnahmeeinrichtung 4 natürlich so ausrichten, dass der Schwerpunkt der Aufnahmeeinrichtung 4 einschließlich dem Bauteil 6 auf einer senkrechten Linie durch den Anlenkpunkt A zu liegen kommt. Ordnet man den Bauteil 6 auf der Aufnahmeeinrichtung 4 entsprechend an, so kann man sehr einfach eine horizontale Lage der Aufnahmeeinrichtung 4 erzwingen.
Natürlich könnten die Längenverhältnisse der Konstruktionselemente 7, 8 und die Lage des Verbindungspunktes V auch anders gewählt werden, wobei sich dann unter Umständen keine rein vertikale Bewegung des Anlenkpunktes A mehr ergibt. Diese überlagerte horizontale Bewegung könnte man kinematisch jedoch z.B. durch eine geeignete Gestaltung der Führungskurve der Führungseinrichtung 5 ausgleichen. Die Auslegung eines solchen kinematischen Systems, wie z.B. bekannte Kulissensteuerung, gehört in das Standardwissen eines entsprechenden Fachmannes und es wird daher nicht näher darauf eingegangen.
Ist hingegen das Ende des Stabes 8 an der Bewegungseinheit 3 in einer Führungseinrichtung 5 geführt und dafür das Führungselement 7 fest an der Bewegungseinrichtung 3 drehbar gelagert, dann ergäbe sich immer eine vertikale und horizontale Bewegung des Anlenkpunktes A, hier natürlich eine kreisbogenförmige, die auch nicht ausgeglichen werden könnte. Eine solche Anordnung wäre jedoch natürlich genauso denkbar.
Es wäre aber natürlich auch denkbar beide Stäbe 7, 8 in einer Führungseinrichtung 5 zu führen.

Würde man den Anlenkpunkt A mit dem Verbindungspunkt V zusammenfallen lassen, d.h. die Last würde direkt an der Verbindung der beiden Stäbe 7, 8 angreifen, so würde sich eine V-förmige Anordnung der Konstruktionselemente ergeben, die jedoch nur einen Extremfall der Y-förmigen Anordnung darstellt und daher in den Begriff Y-förmig subsumiert werden kann.

Die Fig. 2 zeigt nun eine weitere besondere Ausgestaltung der Hub- und Senkeinrichtung 2 eines Transportfahrzeuges 1. Bei diesem Beispiel ist wiederum ein Ende eines Führungselementes 7 über eine Führungseinrichtung 5 geführt bewegbar und drehbar gelagert. Dieses Führungselement 7 ist hier jedoch mit zwei Gelenkrahmen 10, 11 verbunden, die in diesem Beispiel je ein Parallelogramm, mit jeweils zwei parallelen Seiten, bilden, bzw. ist teilweise selbst Teil eines dieser Gelenkrahmen 10, 11. In einer gehobenen bzw. gesenkten Position sind die Konstruktionselemente wieder immer Y-förmig angeordnet.
Jeder der beiden Gelenkrahmen 10, 11 besteht hier aus zwei längeren Stäben 13 und zwei kürzeren Stäben 12, 14, 15, bzw. aus etwas stabähnlichem, als Konstruktionselemente, die natürlich jeweils die gleiche Länge aufweisen müssen, um ein Parallelogramm bilden zu können. Ein erster Gelenkrahmen 10 ist über einen Stab 15 an den beiden Anlenkpunkten A mit der Aufnahmeeinrichtung 4 verbunden bzw. wird der Stab 15 von der Aufnahmeeinrichtung 4 selbst gebildet. An diesen Stab 15 sind über Gelenke 9 zwei weitere Stäbe 13 drehbar gelagert angeordnet, die an der gegenüberliegenden Seite wiederum durch ein Verbindungselement 12, an dem die beiden Stäbe 13 wiederum drehbar gelagert sind, miteinander verbunden sind. Dabei bildet ein Teil des Führungselementes 7, im speziellen der Teil zwischen Verbindungspunkt V und der Verbindung mit der Aufnahmeeinrichtung 4, einen der beiden Stäbe 13. Das zweite Parallelogramm wird durch ein Konstruktionselement 14 gebildet, das hier als Teil der Bewegungseinheit 3 ausgebildet ist und an dem wieder zwei Stäbe 13 drehbar gelagert angeordnet sind, die am gegenüberliegenden Ende der Stäbe wiederum über das Verbindungselement 12 gelenkig verbunden sind. Die beiden so, über das Verbindungselement 12 verbundenen Gelenkrahmen 10, 11 sind über einen einzigen Verbindungspunkt V gelenkig mit dem Führungselement 7 verbunden. Wie bei der Ausführung nach Fig. 1 weist auch hier das Führungselement 7 die doppelte Länge wie die Stäbe 13 auf und der Verbindungspunkt V liegt wieder in der Mitte des Führungselementes 7. Aus der Kinematik dieses Anordnung ergibt sich, dass die Aufnahmeeinrichtung 4 bei einer Bewegung des Führungspunktes F wiederum ausschließlich vertikal bewegt wird und dass, aufgrund der beiden Gelenkrahmen 10, 11, zusätzlich die Aufnahmeeinrichtung 4 in allen Hubpositionen ihre vorgegebene, hier horizontale, Lage beibehält.
Werden die Längenverhältnisse der einzelnen Konstruktionselemente 7, 13 der Gelenkrahmen 10, 11 und die Lage des Verbindungspunktes V anders gewählt, ergibt sich, wie bereits beschrieben, unter Umständen keine reine vertikale Bewegung des Anlenkpunktes A mehr. Diese überlagerte horizontale Bewegung könnte man wieder kinematisch, z.B. durch eine geeignete Gestaltung der Führungskurve der Führungseinrichtung 5, ausgleichen. Gleichfalls wäre es auch hier denkbar, ein anderes oder mehrere Konstruktionselement(e) in einer oder weiteren Führungseinrichtung(en) zu führen, wie oben bereits beschrieben.

Bei beiden oben beschriebenen Ausführungen wird die maximale erreichbare Hubhöhe durch die Länge des Führungselementes 7 vorgegeben, wobei der tatsächliche Hubbereich z.B. durch den Bewegungsspielraum des Führungspunktes F, durch einen Hubantrieb oder durch vorherrschende Platzverhältnisse vorgegeben sein bzw. eingestellt werden kann.

Selbstverständlich wäre es auch denkbar, neben der Führungseinrichtung 5 auch noch eine weitere Hilfsführung vorzusehen. Z.B. könnte der Anlenkpunkt A in einer zusätzlichen vertikalen Hilfsführung oder der Verbindungspunkt V in einer zusätzlichen kreisförmigen Hilfsführung geführt werden, um die Genauigkeit zu erhöhen. Eine solche Hilfsführung würde die Kinematik der Hub- bzw. Senkeinrichtung 2 jedoch nicht verändern und wäre für die Funktion der Hub- bzw. Senkeinrichtung 2 nicht unbedingt erforderlich und ist daher im Sinne der Erfindung nicht als Führungseinrichtung 5 aufzufassen, die wesentlich die kinematischen Verhältnisse der Hub- bzw. Senkeinrichtung 2 bestimmt. Grundsätzlich könnte also jeder beliebige Punkt eines beliebigen Konstruktionselementes in einer Führungseinrichtung geführt werden, womit die Kinematik und die Funktion festgelegt wäre, wobei darüber hinaus beliebige weitere zusätzliche Hilfsführungen vorgesehen werden könnten, die die Kinematik jedoch nicht verändern würden, für die Funktion nicht unbedingt benötigt wären und lediglich eine unterstützende Wirkung hätten.

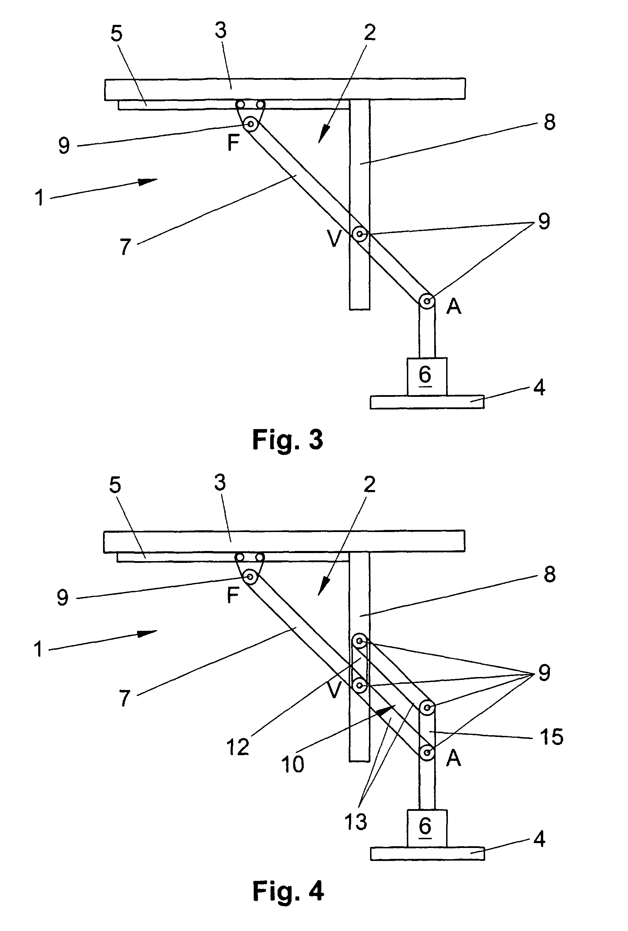

In der Fig. 3 wird nun einer weitere sehr einfache Ausgestaltung eines erfindungsgemäßen Transportfahrzeuges 1 dargestellt. In diesem Beispiel besteht die Hub- bzw. Senkeinrichtung 2 wiederum aus zwei Konstruktionselementen 7, 8, wobei hier eines als Stab 7 und das andere als vertikale Führungseinrichtung 8 ausgeführt ist. Der Stab 7 ist mit einem Ende F in einer horizontalen Führungseinrichtung 5 bewegbar geführt und drehbar gelagert und mit einem weiteren Punkt V, zwischen den beiden Enden des Stabes 7 in der vertikalen Führungseinrichtung 8 bewegbar geführt und drehbar gelagert. Beide Führungseinrichtungen 5, 8 sind dabei an der Bewegungseinheit 3 angeordnet. Die beiden Konstruktionselemente 7, 8 der Hub- und Senkeinrichtung 2 sind dabei in der untersten Hubposition der Aufnahmeeinrichtung 4, also wenn der Punkt V das untere Ende der Führungseinrichtung 8 erreicht hat, wiederum eindeutig Y-förmig angeordnet. Aber auch in jeder anderen Hubposition werden die Konstruktionselemente 7, 8 als Y-förmig angeordnet aufgefasst, da das ungenutzte Ende der Führungseinrichtung 8 in diesen Hubpositionen ohne Funktion ist.
Aus der Kinematik kann sehr einfach entnommen werden, dass sich der Anlenkpunkt A bei einer Hubbewegung hier entlang einer elliptischen Bahn bewegen würde. Durch eine entsprechende Gestaltung der Führungseinrichtung 5 und/oder der Führungseinrichtung 8 könnte man selbstverständlich wieder eine im Wesentlichen vertikale Bewegung der Aufnahmeeinrichtung 4 erreichen.
Bezüglich einer eventuellen Verdrehung der Aufnahmeeinrichtung 4 beim Heben oder Senken gilt das bereits weiter oben gesagte.
Würde man den Anlenkpunkt A und den Verbindungspunkt V in einem Punkt zusammenfallen lassen, also direkt den Anlenkpunkt A in der vertikalen Führung 8 führen, so würde man hier sehr einfach eine vertikale Bewegung der Aufnahmeeinrichtung 4 erreichen.
Um eine kompaktere Bauweise zu erreichen, könnte die vertikale Führungseinrichtung 8 beispielsweise auch teleskopartig ausgeführt sein, d.h., dass die Führungseinrichtung 8, je nach Hubposition mehr oder weniger weit ausgefahren wird.

Das Transportfahrzeug 1 nach Fig. 3 ist in Fig. 4 nun wieder mit einem parallelförmigen Gelenkrahmen 10 ausgestattet. Im Gegensatz zur Ausführung nach Fig. 2 hier jedoch nur mit einem Gelenkrahmen 10. Der Gelenkrahmen 10 besteht wieder aus vier Konstruktionselementen 13, 14, 15, hier Stäbe, die über Gelenke 9 zu einem Parallelogramm miteinander verbunden sind. Einer der Stäbe 13 wird durch einen Teil des Führungselementes 7 gebildet. Dieses Führungselement 7 ist im Führungspunkt F in einer linearen horizontal angeordneten Führungseinrichtung 5 geführt bewegbar und drehbar gelagert. Am Verbindungspunkt V sind der Gelenkrahmen 10 und das Führungselement 7 gelenkig miteinander verbunden. Gleichzeitig wird der Verbindungspunkt V und ein weiterer Punkt des Gelenkrahmens 10 in einem zweiten linearen vertikal angeordneten als Führungseinrichtung 8 ausgebildeten Konstruktionselement der Hub- bzw. Senkeinrichtung 2 geführt bewegbar und drehbar gelagert. Wie schon bei Fig. 2 beschrieben, wird durch diesen Gelenkrahmen 10 erreicht, dass die Aufnahmeeinrichtung 4 ohne Verschwenken gehoben und gesenkt werden kann.

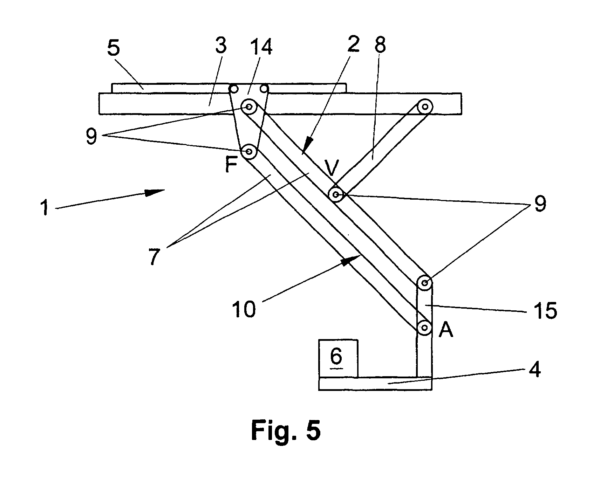

Gleichfalls könnte der Gelenkrahmen 10 der Hub- und Senkeinrichtung 2 in einer Führungseinrichtung 5 geführt sein, wie in Fig. 5 dargestellt. In diesem Ausführungsbeispiel ist ein Konstruktionselement 14 in einer Führungseinrichtung 5 geführt bewegbar. An diesem Konstruktionselement 14 sind über Gelenke 9 zwei Stäbe 7 drehbar gelagert angeordnet, die an ihren entgegengesetzten Enden über ein weiteres stabförmiges Konstruktionselement 15 verbunden sind. Die Konstruktionselemente 7, 14, 15 bilden somit wieder einen parallelogrammförmigen Gelenkrahmen 10. Am Konstruktionselement 15 ist eine Aufnahmeeinrichtung 4 mit einer Last 6 angeordnet, wobei das Konstruktionselement 15 natürlich auch Teil der Aufnahmeeinrichtung 4 sein könnte. Ein weiteres stabförmiges Konstruktionselement 8 ist mit einem Ende an der Bewegungseinheit 3 und mit dem anderen Ende am Verbindungspunkt V mit einem Stab 7 des Gelenkrahmen 10 verbunden.
Die Kinematik dieser Heb- und Senkeinrichtung 2 kann wiederum sehr einfach überlegt werden. Im Wesentlichen stellt dieses Ausführungsbeispiel eine Weiterentwicklung der Hebund Senkeinrichtung nach Fig. 1 dar und es wird damit insbesondere erreicht, dass die vorgegebene Lage der Aufnahmeeinrichtung 4, hier die Horizontale, in jeder Hubposition erhalten bleibt. Ansonsten gilt das bereits zur Fig. 1 gesagte analog.

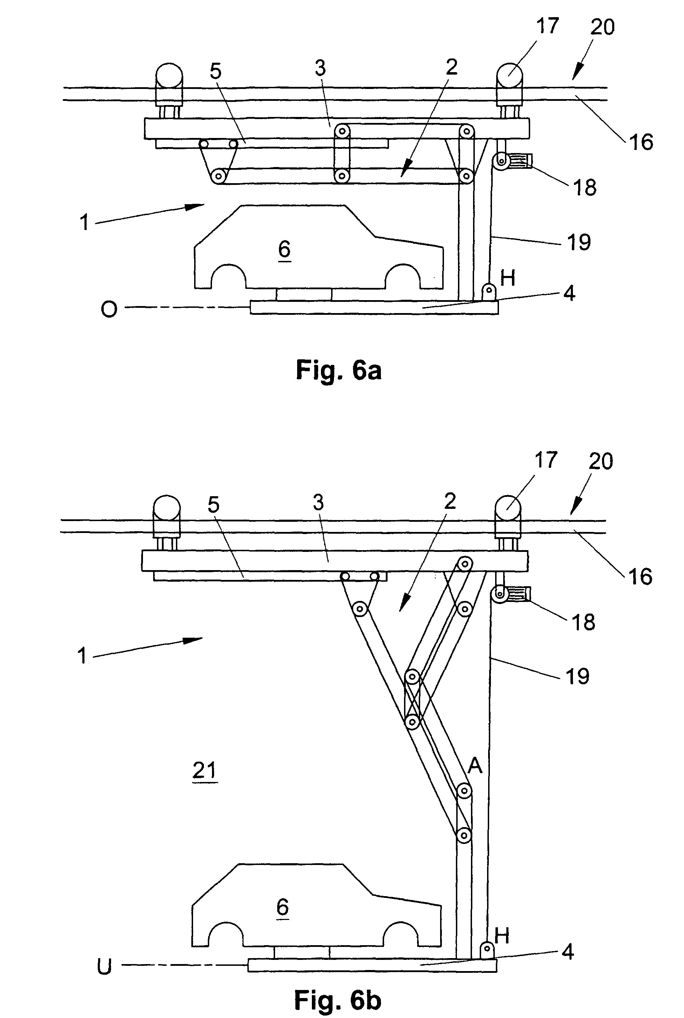

Die Ausgestaltung eines Transportfahrzeuges 1 als Fahrzeuges einer Elektrohängebahn ist in Fig. 6 dargestellt. Dabei weist die Bewegungseinheit 3 Räder bzw. Rollen 17 auf, die auf einer Führungsschiene 16 beweglich eingehängt sind und somit das Transportfahrzeug 1 entlang einer Transportstrecke 20, die durch die Führungsschiene 16 vorgegeben wird, bewegt werden kann. Dazu ist natürlich ein hinlänglich bekannter Antrieb, z.B. geschleppt oder selbstfahrend, erforderlich, der in Fig. 6 jedoch nicht dargestellt ist. Die Transportfahrzeuge 1 hängen dabei meistens an der Decke und werden frei über dem Boden hängend transportiert.
Die Fig. 6a zeigt nun das Transportfahrzeug 1 mit der Aufnahmeeinrichtung 4 in einer oberen Endlage O, d.h. die Hub- bzw. Senkeinrichtung 2 ist vollständig eingefahren und die Aufnahmeeinrichtung 4 hat ihre höchste Position erreicht. In dieser Ansicht erkennt man weiters die Kompaktheit des Transportfahrzeuges 1 mit der Hub- bzw. Senkeinrichtung 2, d.h. das Transportfahrzeug 1 benötigt nur sehr wenig Platz zum Transport z.B. einer Fahrzeugkarosserie als Bauteil 6.
Eine untere Endlage U der Aufnahmeeinrichtung 4 ist beispielhaft in Fig. 6b dargestellt. Das Transportfahrzeug 1 befindet sich hier z.B. in einer Arbeitsstation 21, wie beispielsweise eine Schweißstation, und die Aufnahmeeinrichtung 4 wurde abgesenkt, um den Bauteil 6 in der Arbeitsstation 21, gegebenenfalls für eine Bearbeitung, abzusetzen. Natürlich sind auch alle Zwischenlagen möglich.
Zur Ausübung der Hubbewegung ist in diesem Beispiel an der Bewegungseinheit 3 ein Hubantrieb 18 vorgesehen, der über ein Seil oder eine Kette mit der Aufnahmeeinrichtung 4 verbunden ist. Über eine Seilwinde oder ein Kettenrad kann somit eine Hubbewegung erzeugt werden. Der Hubantrieb 18 greift hier direkt an der Aufnahmeeinrichtung 4 am Hubangriffspunkt H an, was bedeutet, dass die Gewichtskraft der Last 6 zum überwiegenden Teil vom Hubantrieb 18 aufgenommen wird und der Hub- und Senkeinrichtung 2 lediglich ein Führungsfunktion zukommt, jedoch nicht zur Übertragung von Kräften.
Würde der Hubantrieb 18 nicht an der Aufnahmeeinrichtung 4 angreifen, sondern an einem Konstruktionselement der Hub- und Senkeinrichtung 2, so müssten die Konstruktionselemente der Hub- und Senkeinrichtung 2 die Gewichtskraft der Last 6 und die entstehenden Biegemomente aufnehmen und übertragen. Dazu müssten die Konstruktionselemente aber entsprechend dimensioniert werden, was das Gewicht und den Platzbedarf der Hub- und Senkeinrichtung 2 unerwünschter Weise erhöhen würde. Dieser nachteilige Effekt wird umso stärker wirksam, je weiter der Hubangriffspunkt H vom Anlenkpunkt A der Aufnahmeeinrichtung 4 entfernt ist. Der Hubantrieb 18 sollte in diesem Fall daher in der Nähe der Aufnahmeeinrichtung 4 angreifen, sodass die Belastung der Hub- und Senkeinrichtung 2 möglichst gering wird und die Hub- und Senkeinrichtung 2 möglichst leicht und kompakt dimensioniert werden kann. Insbesondere sollte der Hubangriffspunkt H des Hubantriebes 18 nicht mehr als 50% der Gesamtlänge des mit der Aufnahmeeinrichtung 4 verbundenen Konstruktionselementes, vorzugsweise 15% oder 25%, vom Anlenkpunkt A der Aufnahmeeinrichtung 4 entfernt sein.

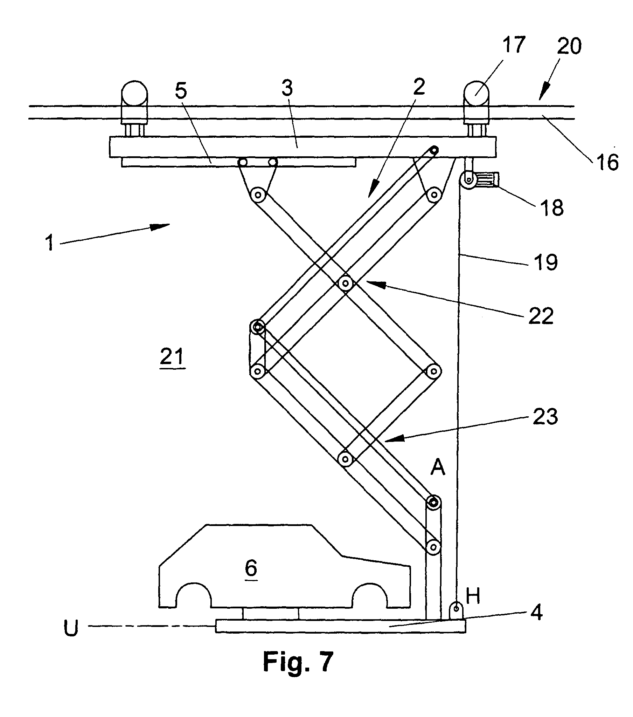

Um die mögliche Hubhöhe der Hub- und Senkeinrichtung 2 eines Transportfahrzeuges 1 zu vergrößern, zeigt die Fig. 7 eine Ausführungsvariante, in der die Hub- und Senkeinrichtung 2 mit einem herkömmlichen, bekannten Scherenmechanismus 22 erweitert wurde. Dabei ist zur Last 6 hin ein Y-förmiger Teil 23 der Hub- und Senkeinrichtung 2, womit die Vorteile der Y-förmigen Anordnung erhalten bleiben, und zur Bewegungseinheit 3 hin der Scherenmechanismus 22 vorgesehen ist. Die Kinematik der Hub- und Senkeinrichtung 2 kann durch die Gestaltung und Verbindung der Konstruktionselemente sowie der Führungseinrichtung 5, wie oben eingehend ausgeführt, sehr einfach beeinflusst werden.

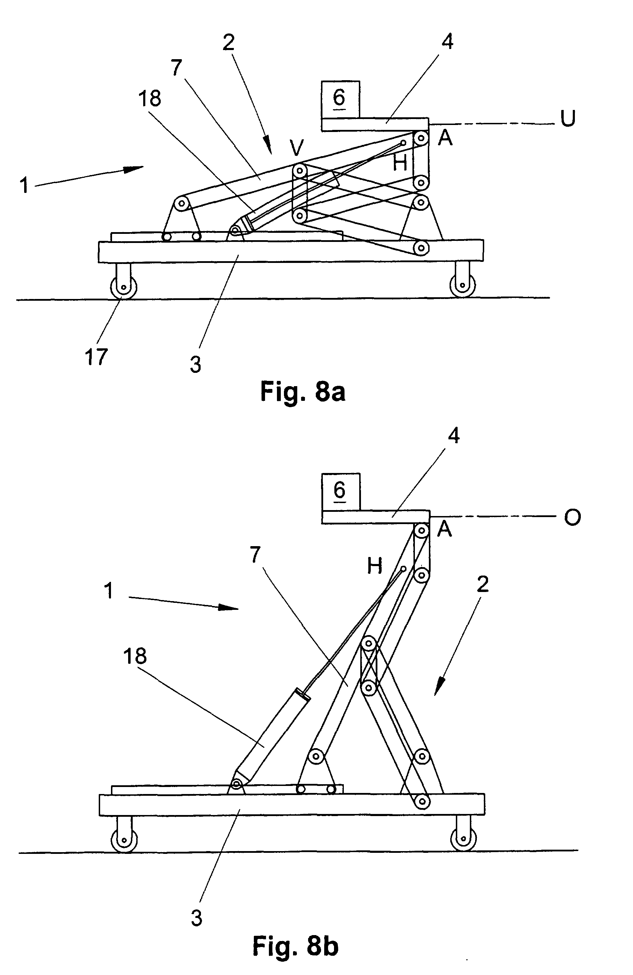

Ein bodengeführtes Transportfahrzeug 1 ist in Fig. 8 dargestellt. Bei diesem Fahrzeug weist die Bewegungseinheit 3 wiederum Räder oder Rollen 17, oder ähnliches, auf mittels denen das Transportfahrzeug 1 am Boden bewegt werden kann. Dazu könnten am Boden auch hinlänglich bekannte Führungs- oder Leitsysteme vorgesehen sein, um das Transportfahrzeug 1 entlang einer Bahn zu bewegen. Ein Bauteil 6 kann hier wiederum von einer unteren Endlage U, Fig. 8a, in eine obere Endlage O, Fig. 8b, gebracht werden. Natürlich sind auch alle Zwischenlagen möglich. Dazu ist als Hubantrieb 18 hier ein Pneumatik- oder Hydraulikzylinder an der Bewegungseinheit 3 vorgesehen, dessen beweglicher Kolben am Hubangriffspunkt H an einem Konstruktionselement der Hub- bzw. Senkeinrichtung 2 angreift. Der Hubangriffspunkt H ist dabei in der Nähe des Anlenkpunktes A der Aufnahmeeinrichtung 4 angeordnet, also in einem Bereich von 0 bis 50% der Länge des Konstruktionselementes 7 an dem der Hubangriffpunkt H angeordnet ist.

Ein erfindungsgemäßes Transportfahrzeug 1 könnte natürlich auch mit mehr als einer Hub- bzw. Senkeinrichtung 2 ausgestattet sein. Es wäre z.B. denkbar in Fahrtrichtung des Transportfahrzeuges 1 auf beiden Seiten je eine oder mehr Hub- bzw. Senkeinrichtung 2 vorzusehen.
Genauso wäre es auch denkbar die Hub- bzw. Senkeinrichtung 2 im Rahmen der Erfindung anders zu gestalten. Beispielsweise könnten zwei in Fahrtrichtung betrachtet nebeneinanderliegende Stäbe 8, oder zwei Gelenkrahmen 10 und 11 vorgesehen werden zwischen denen das Führungselement 7 angeordnet ist. Eine solche Ausgestaltung hätte den Vorteil, dass diese aufgrund der symmetrischen Anordnung der Konstruktionselemente im Wesentlichen momentenfrei wäre. Aber es sind natürlich auch alle anderen mögliche kinematische Ausgestaltungen durch diese Erfindung umfasst.

Wenn in den obigen Ausführungen von der Länge eines Stabes oder Konstruktionselementes die Rede ist, dann ist damit natürlich der geradlinige Abstand zwischen den Drehpunkten zweier Gelenke zu verstehen. Wie weit die Konstruktionselemente über den Drehpunkt hinausragen ist nicht von Bedeutung.
Das Gleiche gilt auch für das Ende des Konstruktionselementes. Mit Ende ist nicht unbedingt das tatsächliche Ende des Konstruktionselementes zu verstehen, sondern man bezieht sich damit wiederum auf einen Drehpunkt. Das Konstruktionselement kann dabei natürlich über den Drehpunkt hinausragen.
Es können natürlich ohne Einschränkungen beliebige Konstruktionselemente, wie Stäbe, Träger, Rohre, Formrohre, etc. verwendet werden, die natürlich auch beliebig geformt sein könnten, wie z.B. gerade, gekrümmt, etc.

Ein Transportfahrzeug 1 wie oben beschrieben kann z.B. in Fertigungslinien der KFZ-Industrie zum Transport von Karosserien oder Karosserieteilen eingesetzt werden, z.B. als Hängebahn. Dabei werden eine Mehrzahl von Transportfahrzeugen 1 zwischen mehreren Arbeitsstationen 21, z.B. Schweißstationen, bewegt. Die Transportfahrzeuge 1 werden entlang einer an der Decke befestigten Schien bewegt, wofür die Bewegungseinheit 3 des Transportfahrzeuges 1 entsprechend ausgeführt sein muss. In den Arbeitsstationen 21 werden die Aufnahmeeinrichtungen 4 mit den Bauteilen 6 zur Bearbeitung abgesenkt. Durch die spezielle Kinematik der Hub- bzw. Senkeinrichtung 2 sind die Bauteile 6 auf der Aufnahmeeinrichtung 4 seitlich frei zugänglich und können daher ungehindert, z.B. von Schweißrobotern, bearbeitet werden.

Üblicherweise werden zur genauen Lagefixierung bei Übergaben bzw. Übernahme der Aufnahmeeinrichtungen 4 oder der Bauteile 6 von/an Bearbeitungsstationen und anderen Transportmitteln Zentriereinrichtungen, wie z.B. Führungszapfen oder Aufnahmezapfen, verwendet. Durch die geführte Bewegung, vorzugsweise eine rein vertikale Bewegung, können die Aufnahmeeinrichtungen 4 bzw. die Bauteile 6 einfach und sicher in die Zentriereinrichtungen gleiten. Bei dem vorliegenden erfindungsgemäßen Transportfahrzeug kommt es zu keinem seitlichen Ausweichen bei Änderung des Lastmoments, hervorgerufen durch die außermittige Last am Teileträger. Es tritt lediglich ein geringes Kippen, gemäß der Dehnung bzw. Verkürzung der Konstruktionselemente der Hub- bzw. Senkeinrichtung der Gelenksrahmen unter Änderung des Lastmomentes, auf. Dadurch kann es zu keiner Zwängung in Führungszapfen oder anderen Zentrierungen kommen, wodurch eine sichere Positionierung ermöglicht wird.

Zur Übergabe der Aufnahmeeinrichtung 4 bzw. des Bauteils 6 in einer Arbeitsstation 21 muss diese nicht unbedingt vertikal abgesenkt oder angehoben werden. Es könnten natürlich auch schräg angeordnete Zentriereinrichtungen vorgesehen werden, die dann eine entsprechende Übergabe der Aufnahmeeinrichtung 4 bei einer schrägen oder kurvenförmige Bewegung der Aufnahmeeinrichtung 4 zulassen würden.

Der Klappmechanismus der Hub- bzw. Senkeinrichtung 2 hat außerdem den Vorteil, dass auf einfache Weise Leitungen zur Versorgung, beispielsweise Strom, Wasser, Druckluft, etc., von Einrichtungen an der Aufnahmeeinrichtung, wie z.B. Spann- oder Schweißeinrichtungen, entlang den Konstruktionselementen geführt werden können, wobei diese nicht speziell geschützt werden müssen, da sich die Konstruktionselemente aufgrund der Kinematik nicht im Arbeitsbereich befinden und die Gefahr der Beschädigung der Leitungen daher gering ist.

Als Führungseinrichtungen können natürlich beliebige, hinlänglich bekannte und hier daher nicht eigens beschriebene Konstruktionen eingesetzt werden, wie z.B. ein Zapfen, ein Schlitten oder eine Rolle, die in einer entsprechenden Schiene geführt werden, oder auch eine Gleitstangenführung, Kulissenführung, etc.

## Patentansprüche

1. Transportanlage zum Transport von Bauteilen (6), vorzugsweise Fahrzeugkarosserien, zwischen einer Mehrzahl von Stationen (21), vorzugsweise Fertigungsstationen, entlang einer Transportstrecke (20), entlang der mit einer Mehrzahl von Transportfahrzeugen (1) eine Mehrzahl von Bauteilen (6) transportierbar sind, wobei die Transportfahrzeuge (1) zumindest eine Bewegungseinheit (3), zumindest eine Aufnahmeeinrichtung (4) zur Aufnahme der Bauteile (6) und zumindest eine Heb- bzw. Senkeinrichtung (2) zum Heben und/oder Senken der Aufnahmeeinrichtung (4), bestehend aus zumindest einem Hubantrieb (18) und einer Anzahl im Wesentlichen starrer, vorzugsweise langgestreckter, Konstruktionselemente (7, 8), die durch zumindest ein erstes Gelenk (9) miteinander verbunden sind, aufweisen, wobei zumindest ein erstes und ein zweites Konstruktionselement (7, 8) der Heb- bzw. Senkeinrichtung (2) zumindest in einer Hubposition Y-förmig angeordnet sind, **dadurch gekennzeichnet, dass** je ein erstes Ende dieser zwei Konstruktionselemente (7, 8) durch ein zweites und drittes Gelenk (9) mit der Bewegungseinheit (3) verbunden ist, dass das zweite Ende des ersten Konstruktionselements (7) durch ein viertes Gelenk (9) mit der Aufnahmeeinrichtung (4) verbunden ist, dass das zweite Ende des zweiten Konstruktionselements (8) zwischen den beiden Enden des ersten Konstruktionselements (7) an diesem durch das erste Gelenk (9) drehbar gelagert angeordnet ist, dass das erste Ende eines der zwei Konstruktionselemente (7,8) in einer Führungseinrichtung (5) geführt bewegbar und drehbar angeordnet ist und dass der Hubangriffspunkt (H) des Hubantriebes (18) an der Aufnahmeeinrichtung (4) oder in der Nähe eines Anlenkpunktes (A) der Aufnahmeeinrichtung (4) an einem mit der Aufnahmeeinrichtung (4) verbundenen Konstruktionselement (7, 8), vorzugsweise im Bereich von 0 bis 50%, insbesondere im Bereich von 0 bis 25%, der Länge des längsten mit der Aufnahmeeinrichtung (4) verbundenen Konstruktionselementes, angeordnet ist.

2. Transportanlage nach Anspruch 1, **dadurch gekennzeichnet, dass** das erste Ende des ersten Konstruktionselements (7) in der Führungseinrichtung (5) beweglich und drehbar gelagert angeordnet ist.

3. Transportanlage nach Anspruch 1 oder 2, **dadurch gekennzeichnet, dass** eines der Konstruktionselemente (7, 8) länger als das andere Konstruktionselement ausgeführt ist.

4. Transportanlage nach Anspruch 3, **dadurch gekennzeichnet, dass** das lange Konstruktionselement im Wesentlichen die doppelte Länge des kurzen Konstruktionselementes aufweist.

5. Transportanlage nach Anspruch 3 oder 4, **dadurch gekennzeichnet, dass** das kurze Konstruktionselement im Wesentlich in der Mitte des langen Konstruktionselementes mit dem langen Konstruktionselement gelenkig verbunden ist.

6. Transportanlage nach einem der Ansprüche 3 bis 5, **dadurch gekennzeichnet, dass** das erste Konstruktionselement (7) das lange Konstruktionselement ist.

7. Transportanlage nach einem der Ansprüche 1 bis 6, **dadurch gekennzeichnet, dass** die Führungseinrichtung (5) derart ausgeführt ist, dass durch die Kinematik der Heb- bzw. Senkeinrichtung (2) das mit der Aufnahmeeinrichtung (4) verbundene Ende des ersten Konstruktionselements (7) im Wesentlichen vertikal bewegbar ist.

8. Transportanlage nach Anspruch 1, **dadurch gekennzeichnet, dass** die Heb- bzw. Senkeinrichtung (2) mit zumindest einen mehrgliedrigen Gelenkrahmen (10, 11), bestehend aus einer Anzahl gelenkig miteinander verbundener Konstruktionselemente (12, 13), und dem ersten Konstruktionselement (7) ausgeführt ist.

9. Transportanlage nach Anspruch 8, **dadurch gekennzeichnet, dass** zumindest ein, vorzugsweise jeder, der mehrgliedrigen Gelenkrahmen (10, 11) als Parallelogramm, bestehend aus vier gelenkig miteinander verbundenen Konstruktionselementen (12, 13, 14, 15), von welchem jeweils zwei Konstruktionselemente (13, 12 und 15, 12 und 14) in allen Positionen im Wesentlichen parallel angeordnet sind, ausgeführt ist.

10. Transportanlage nach Anspruch 8 oder 9, **dadurch gekennzeichnet, dass** ein Konstruktionselement eines ersten Gelenkrahmens gleichzeitig auch ein Konstruktionselement eines zweiten Gelenkrahmens ist und dieses Verbindungselement (12) die Verbindung zwischen den beiden Gelenkrahmen (10, 11) bildet.

11. Transportanlage nach Anspruch 10, **dadurch gekennzeichnet, dass** ein Konstruktionselement (14) eines Gelenkrahmens (10, 11) starr mit der Bewegungseinheit (3) verbunden ist bzw. von der Bewegungseinheit (3) gebildet wird und an diesem Konstruktionselement (14) die Enden zweier weiterer Konstruktionselemente (13) drehbar gelagert angeordnet sind, wobei die beiden anderen Enden dieser Konstruktionselemente (13) am Verbindungselement (12) drehbar gelagert angeordnet sind und diese vier Konstruktionselemente (12, 13, 14) einen ersten Gelenkrahmen (11) bilden.

12. Transportanlage nach Anspruch 10 oder 11, **dadurch gekennzeichnet, dass** ein Konstruktionselement (15) eines Gelenkrahmens (10, 11) starr mit der Aufnahmeeinrichtung (4) verbunden ist bzw. von der Aufnahmeeinrichtung (4) gebildet wird und an diesem Konstruktionselement (15) die Enden zweier weiterer Konstruktionselemente (13) drehbar gelagert angeordnet sind, wobei die beiden anderen Enden dieser Konstruktionselemente (13) am Verbindungselement (12) drehbar gelagert angeordnet sind und diese vier Konstruktionselemente (12, 13, 15) einen zweiten Gelenkrahmen (10) bilden.

13. Transportanlage nach einem der Ansprüche 8 bis 12, **dadurch gekennzeichnet, dass** das erste Ende des ersten Konstruktionselements (7) in der Führungseinrichtung (5) geführt bewegbar und drehbar angeordnet ist und das andere Ende des ersten Konstruktionselements (7) mit einem Konstruktionselement (12, 13) eines Gelenkrahmens (10, 11) bzw. mit der Aufnahmeeinrichtung (4) verbunden ist.

14. Transportanlage nach Anspruch 13, **dadurch gekennzeichnet, dass** das erste Konstruktionselement (7) gleichzeitig zumindest teilweise ein Konstruktionselement (13) eines Gelenkrahmens (10, 11) ist.

15. Transportanlage nach einem der Ansprüche 8 bis 14, **dadurch gekennzeichnet, dass** das erste Konstruktionselement (7) länger als das längste Konstruktionselement der beiden Gelenkrahmen (10, 11) ausgeführt ist.

16. Transportanlage nach Anspruch 15, **dadurch gekennzeichnet, dass** das erste Konstruktionselement (7) doppelt so lang wie das längste Konstruktionselement des Gelenkrahmens (10, 11) ausgeführt ist.

17. Transportanlage nach einem der Ansprüche 14 bis 16, **dadurch gekennzeichnet, dass** ein Ende des Verbindungselementes (12) zwischen den beiden Enden des ersten Konstruktionselements (7) am ersten Konstruktionselement (7) drehbar gelagert angeordnet ist.

18. Transportanlage nach Anspruch 17, **dadurch gekennzeichnet, dass** ein Ende des Verbindungselementes (12) zwischen den beiden Enden im Wesentlichen in der Mitte des ersten Konstruktionselements (7) am ersten Konstruktionselement (7) drehbar gelagert angeordnet ist.

19. Transportanlage nach einem der Ansprüche 1 bis 18, **dadurch gekennzeichnet, dass** die Konstruktionselemente (13, 14, 15), das Verbindungselement (12) und/oder das erste Konstruktionselement (7) zumindest teilweise als Stäbe ausgeführt sind, die vorzugsweise aus Rohren, Formrohren, oder Profilen gebildet sind.

20. Transportanlage nach Anspruch 1, **dadurch gekennzeichnet, dass** zumindest ein erster Teil der Hub- und Senkeinrichtung (2) als hinlänglich bekannter X-förmiger Scherenmechanismus (22) ausgebildet ist und daran ein aus einem ersten und einem zweiten Konstruktionselement (7, 8) aufgebauter Y-förmiger zweiter Teil (23) der Hub- und Senkeinrichtung (2) anschließt, wobei zumindest ein Konstruktionselement, vorzugsweise ein Konstruktionselement des X-förmigen Scherenmechanismus (22), der Hub- und Senkeinrichtung (2) in einer Führungseinrichtung (5) geführt bewegbar gelagert ist.

21. Transportanlage nach Anspruch 20, **dadurch gekennzeichnet, dass** eine Anzahl der Konstruktionselemente als parallelogrammförmige Gelenkrahmen ausgebildet sind.

22. Transportanlage nach Anspruch 21, **dadurch gekennzeichnet, dass** ein Gelenkrahmen mit der Aufnahmeeinrichtung (4) verbunden ist.

23. Transportanlage nach Anspruch 21 oder 22, **dadurch gekennzeichnet, dass** ein Gelenkrahmen Teil des X-förmigen Scherenmechanismus (22) ist.

24. Transportanlage zum Transport von Bauteilen (6), vorzugsweise Fahrzeugkarosserien, zwischen einer Mehrzahl von Stationen (21), vorzugsweise Fertigungsstationen, entlang einer Transportstrecke (20), entlang der mit einer Mehrzahl von Transportfahrzeugen (1) eine Mehrzahl von Bauteilen (6) transportierbar sind, wobei die Transportfahrzeuge (1) zumindest eine Bewegungseinheit (3), zumindest eine Aufnahmeeinrichtung (4) zur Aufnahme der Bauteile (6) und zumindest eine Heb- bzw. Senkeinrichtung (2) zum Heben und/oder Senken der Aufnahmeeinrichtung (4), bestehend aus zumindest einem Hubantrieb (18) und zumindest zwei im Wesentlichen starrer, vorzugsweise langgestreckter, Konstruktionselemente (7, 8), die durch zumindest ein erstes Gelenk (9) miteinander verbunden sind, aufweisen, wobei zumindest ein erstes und ein zweites Konstruktionselement (7, 8) der Heb- bzw. Senkeinrichtung (2) zumindest in einer Hubposition Y-förmig angeordnet sind, **dadurch gekennzeichnet, dass** das zweite Konstruktionselement (8) der Heb- bzw. Senkeinrichtung (2) als erste Führungseinrichtung ausgeführt ist, deren erstes Ende starr an der Bewegungseinheit (3) befestigt ist und in der zumindest ein vorbestimmbarer erster Punkt (V) des ersten Konstruktionselementes (7) zwischen den beiden Enden der ersten Führungseinrichtung (8) geführt bewegbar und drehbar gelagert angeordnet ist, dass ein erstes Ende des ersten Konstruktionselements (7) in einer an der Bewegungseinheit (3) angeordneten zweiten Führungseinrichtung (5) geführt bewegbar und drehbar angeordnet ist, und das zweite Ende des ersten Konstruktionselements (7) über ein zweites Gelenk (9) mit der Aufnahmeeinrichtung (4) verbunden ist und dass der Hubangriffspunkt (H) des Hubantriebes (18) an der Aufnahmeeinrichtung (4) oder in der Nähe eines Anlenkpunktes (A) der Aufnahmeeinrichtung (4) an einem mit der Aufnahmeeinrichtung (4) verbundenen Konstruktionselement (7, 8), vorzugsweise im Bereich von 0 bis 50%, insbesondere im Bereich von 0 bis 25%, der Länge des längsten mit der Aufnahmeeinrichtung (4) verbundenen Konstruktionselementes, angeordnet ist.

25. Transportanlage nach Anspruch 24, **dadurch gekennzeichnet, dass** die Heb- bzw. Senkeinrichtung (2) mit zumindest einen mehrgliedrigen Gelenkrahmen (10), bestehend aus einer Anzahl gelenkig miteinander verbundener Konstruktionselemente (13), und dem ersten Konstruktionselement (7) ausgeführt ist, wobei das erste Konstruktionselement (7) gegebenenfalls Teil des Gelenkrahmens (10) ist.

26. Transportanlage nach Anspruch 25, **dadurch gekennzeichnet, dass** das erste Konstruktionselement (7) gelenkig mit dem Gelenksrahmen (10) verbunden ist.

27. Transportanlage nach Anspruch 25 oder 26, **dadurch gekennzeichnet, dass** das der Gelenkrahmen (10) mit der Aufnahmeeinrichtung (4) verbunden ist.

28. Transportanlage nach einem der Ansprüche 24 bis 27, **dadurch gekennzeichnet, dass** die erste Führungseinrichtung (8) im Wesentlichen horizontal oder schräg und die zweite Führungseinrichtung (5) im Wesentlichen vertikal oder schräg ausgerichtet ist.

29. Transportanlage nach einem der Ansprüche 1 bis 28, **dadurch gekennzeichnet, dass** die Führungseinrichtungen (5, 8) zumindest teilweise als lineare Führung ausgeführt sind.

30. Transportanlage nach einem der Ansprüche 1 bis 29, **dadurch gekennzeichnet, dass** die Bewegungseinheit (3) mit Einrichtungen zum Bewegen des Transportfahrzeuges (1), beispielsweise Räder, Rollen, Antriebe, Steuereinheiten, etc., ausgestattet ist.

31. Transportanlage nach einem der Ansprüche 1 bis 30, **dadurch gekennzeichnet, dass** der Hubantrieb (18) als Seilantrieb, Kettenantrieb, Gewindestangenantrieb, Zahnstangenantrieb, Hydraulikzylinder oder Pneumatikzylinder ausgeführt ist.

32. Transportanlage nach einem der Ansprüche 1 bis 31, **dadurch gekennzeichnet, dass** in Transportrichtung zu beiden Seiten des Transportfahrzeuges (1) zumindest je eine Hubund Senkeinrichtung (2) angeordnet ist.

33. Transportanlage nach einem der Ansprüche 1 bis 32, **dadurch gekennzeichnet, dass** das Transportfahrzeug (1) als Fahrzeug einer Hängebahn, vorzugsweise eine Elektrohängebahn ausgeführt ist, wobei die Bewegungseinheit (3) mittels geeigneter Einrichtungen, wie z.B. Rollen, Räder, etc., an einem über dem Boden angeordneten Führungssystem (16) bewegbar ist.

34. Transportanlage nach einem der Ansprüche 1 bis 32, **dadurch gekennzeichnet, dass** das Transportfahrzeug (1) als Bodenfahrzeug, beispielsweise eine Schubplattform, ausgeführt ist, wobei die Bewegungseinheit (3) selbstfahrend oder fremdgetrieben am Boden bewegbar ist.

35. Transportanlage nach einem der Ansprüche 1 bis 34, **dadurch gekennzeichnet, dass** die Aufnahmeeinrichtung (4) oder der Bauteil (6) in zumindest einer Station (21) in einer Übergabeposition durch die Heb- bzw. Senkeinrichtung (2) übergeb- bzw. übernehmbar ist, wobei in der Übergabeposition und/oder an der Aufnahmeeinrichtung (4) bzw. am Bauteil (6) zur Positionsbestimmung der Aufnahmeeinrichtung (4) bzw. des Bauteils (6) in der Station (21) zumindest eine Zentriereinrichtung vorgesehen ist.

36. Transportanlage nach Anspruch 35, **dadurch gekennzeichnet, dass** die Aufnahmeeinrichtung (4) bzw. der Bauteil (6) zur Übergabe bzw. Übernahme im Wesentlichen vertikal heb- bzw. senkbar ist und die Zentriereinrichtung entsprechend vertikal ausgerichtet ist.

37. Transportanlage nach Anspruch 35, **dadurch gekennzeichnet, dass** die Aufnahmeeinrichtung(4) bzw. der Bauteil (6) zur Übergabe bzw. Übernahme im Wesentlichen schräg bzw. kurvenförmig heb- bzw. senkbar ist und die Zentriereinrichtung ebenfalls entsprechend schräg ausgerichtet ist.

## Claims

1. Transport system for the transport of components (6), preferably vehicle bodies, between a plurality of stations (21), preferably production stations, along a transport path (20), along which a plurality of components (6) can be transported by a plurality of transport vehicles (1), the transport vehicles (1) having at least one movement unit (3), at least one holding device (4) for holding the components (6) and at least one lifting and lowering device (2) for lifting and/or lowering the holding device (4), comprising at least one lifting drive (18) and a number of substantially rigid, preferably elongated, constructional elements (7, 8), which are connected to one another by at least a first joint (9), at least a first and a second constructional element (7, 8) of the lifting and lowering device (2) are arranged in a Y shape, at least in one lifting position, **characterized in that** each of a first end of these two constructional elements (7, 8) being connected to the movement unit (3) by a second and third joint (9), **in that** the second end of the first constructional element (7) being connected to the holding device (4) by a fourth joint (9), **in that** the second end of the second constructional element (8) is arranged between the two ends of the first constructional element (7), mounted on the latter such that it can rotate because of the first joint (9), **in that** the first end of one of the two constructional elements (7, 8) being arranged in a guide device (5) such that it can be moved in a guided manner and rotated and **in that** the point of action (H) of the lifting drive (18) is arranged on the holding device (4) or in the vicinity of an attachment point (A) of the holding device (4) on a constructional element (7, 8) connected to the holding device (4) preferably in the range from 0 to 50%, in particular in the range from 0 to 25%, of the length of the longest constructional element connected to the holding device (4).

2. Transport system according to Claim 1, **characterized in that** the first end of the first constructional element (7) is moveably and rotatably arranged in the guide device (5).

3. Transport system according to Claim 1 or 2, **characterized in that** one of the constructional elements (7, 8) is designed to be longer than the other constructional element.

4. Transport system according to Claim 3, **characterized in that** the long constructional element is substantially twice as long as the short constructional element.

5. Transport system according to Claim 3 or 4, **characterized in that** the short constructional element is attached to the long constructional element in an articulated manner substantially in the middle of the long constructional element.

6. Transport system according to one of Claims 3 to 5, **characterized in that** the first constructional element (7) is the long constructional element.

7. Transport system according to one of Claims 1 to 6, **characterized in that** the guide device (5) is designed in such a way that, as a result of the kinematics of the lifting and lowering device (2), that end of the first constructional element (7) which is connected to the holding device (4) can be moved substantially vertically.

8. Transport system according to Claim 1, **characterized in that** the lifting and lowering device (2) is implemented with at least one multi-link jointed frame (10, 11), comprising a number of constructional elements (12, 13) that are connected to one another in an articulated manner, and the first constructional element (7).

9. Transport system according to Claim 8, **characterized in that** at least one, preferably each, of the multi-link jointed frames (10, 11) is implemented as a parallelogram, comprising four constructional elements (12, 13, 14, 15) that are connected to one another in an articulated manner, of which in each case two constructional elements (13, 12 and 15, 12 and 14) are arranged substantially parallel in all positions.

10. Transport system according to Claim 8 or 9, **characterized in that** a constructional element of a first jointed frame is simultaneously also a constructional element of a second jointed frame, and this connecting element (12) forms the connection between the two jointed frames (10, 11).

11. Transport system according to Claim 10, **characterized in that** a constructional element (14) of a jointed frame (10, 11) is rigidly connected to the movement unit (3) or is formed by the movement unit (3), and the ends of two further constructional elements (13) are arranged to be rotatably mounted on this constructional element (14), the two other ends of these constructional elements (13) being arranged to be rotatably mounted on the connecting element (12), and these four constructional elements (12, 13, 14) forming a first jointed frame (11).

12. Transport system according to Claim 10 or 11, **characterized in that** a constructional element (15) of a jointed frame (10, 11) is connected rigidly to the holding device (4) or is formed by the holding device (4) and the ends of two further constructional elements (13) are arranged to be rotatably mounted on this constructional element (15), the two other ends of these constructional elements (13) being arranged to be rotatably mounted on the connecting element (12), and these four constructional elements (12, 13, 15) forming a second jointed frame (10).

13. Transport system according to one of Claims 8 to 12, **characterized in that** the first end of the first constructional element (7) is arranged such that it can be moved and guided in the guide device (5) and rotated, and the other end of the first constructional element (7) is connected to a constructional element (12, 13) of a jointed frame (10, 11) or to the holding device (4).

14. Transport system according to Claim 13, **characterized in that** the first constructional element (7) is simultaneously, at least to some extent, a constructional element (13) of a jointed frame (10, 11).

15. Transport system according to one of Claims 8 to 14, **characterized in that** the first constructional element (7) is designed to be longer than the longest constructional element of the two jointed frames (10, 11).

16. Transport system according to Claim 15, **characterized in that** the first constructional element (7) is designed to be twice as long as the longest constructional element of the jointed frame (10, 11).

17. Transport system according to one of Claims 14 to 16, **characterized in that** one end of the connecting element (12) is arranged to be rotatably mounted on the guide element (7), between the two ends of the guide element (7).

18. Transport system according to Claim 17, **characterized in that** one end of the connecting element (12) is arranged to be rotatably mounted on the first constructional element (7), between the two ends, substantially in the middle of the first constructional element (7).

19. Transport system according to one of Claims 1 to 18, **characterized in that** the constructional elements (13, 14, 15), the connecting element (12) and/or the first constructional element (7) are implemented, at least to some extent, as rods, which are preferably formed as tubes, shaped tubes or profiles.

20. Transport system according to Claim 1, **characterized in that** at least a first part of the lifting and lowering device (2) is constructed as a sufficiently well known X-shaped scissors mechanism (22) and this is adjoined by a Y-shaped second part (23) of the lifting and lowering device (2), built up from a first and second constructional element (7, 8), at least one constructional element, preferably a constructional element of the X-shaped scissors mechanism (22), of the lifting and lowering device (2) being mounted such that it can be moved and guided in a guide device (5).

21. Transport system according to Claim 20, **characterized in that** a number of the constructional elements are formed as parallelogram-like jointed frames.

22. Transport system according to Claim 21, **characterized in that** one jointed frame is connected to the holding device (4).

23. Transport system according to Claim 21 or 22, **characterized in that** one jointed frame is part of the X-shaped scissors mechanism (22).

24. Transport system for the transport of components (6), preferably vehicle bodies, between a plurality of stations (21), preferably production stations, along a transport path (20), along which a plurality of components (6) can be transported by a plurality of transport vehicles (1), the transport vehicles (1) having at least one movement unit (3), at least one holding device (4) for holding the components (6) and at least one lifting and lowering device (2) for lifting and/or lowering the holding device (4), comprising at least one lifting drive (18) and at least two substantially rigid, preferably elongated, constructional elements (7, 8), which are connected to one another by at least a first joint (9), at least a first and a second constructional element (7, 8) of the lifting and lowering device (2) are arranged in a Y shape, at least in one lifting position, **characterized in that** the second constructional element (8) of the lifting and lowering device (2) is designed as first guide device, the first end of which being rigidly connected to the movement unit (3) and at least one predeterminable first point (V) of the first constructional element (7) is arranged between the ends of the first guide device (8) such that it can be moved and guided in the first guide device (8) and rotated, **in that** a first end of the first constructional element (7) is arranged in a second guide device (5) which is arranged on the movement unit (3) such that it can be moved and guided in the second guide device (5) and rotated and the second end of the first constructional element (7) being connected to the holding device (4) by a second joint (9), and **in that** the point of action (H) of the lifting drive (18) is arranged on the holding device (4) or in the vicinity of an attachment point (A) of the holding device (4) on a constructional element (7, 8) connected to the holding device (4) preferably in the range from 0 to 50%, in particular in the range from 0 to 25%, of the length of the longest constructional element connected to the holding device (4).

25. Transport system according to Claim 23, **characterized in that** the lifting and lowering device (2) is implemented with at least one multi-link jointed frame (10), comprising a number of constructional elements (13) that are connected to one another in an articulated manner, and the first constructional element (7), the first constructional element (7) possibly being part of the jointed frame (10).

26. Transport system according to Claim 25, **characterized in that** the first constructional element (7) is connected to the jointed frame (10) in an articulated manner.

27. Transport system according to Claim 25 or 26, **characterized in that** the jointed frame (10) is connected to the holding device (4).

28. Transport system according to one of Claims 24 to 27, **characterized in that** the first guide device (8) is aligned substantially vertically or obliquely, and the second guide device (5) is aligned substantially horizontally or obliquely.

29. Transport system according to one of Claims 1 to 28, **characterized in that** the guide devices (5, 8) are implemented, at least to some extent, as a linear guide.

30. Transport system according to one of Claims 1 to 29, **characterized in that** the movement unit (3) is equipped with devices for moving the transport vehicle (1), for example wheels, rollers, drives, control units, etc.

31. Transport system according to one of Claims 1 to 30, **characterized in that** the lifting drive (18) is implemented as a cable drive, chain drive, threaded rod drive, rack drive, hydraulic cylinder or pneumatic cylinder.

32. Transport system according to one of Claims 1 to 31, **characterized in that** at least one lifting and lowering device (2) is in each case arranged on both sides of the transport vehicle (1) in the transport direction.

33. Transport system according to one of Claims 1 to 32, **characterized in that** the transport vehicle (1) is designed as a vehicle for a suspended conveyor, preferably an electric suspended conveyor, it being possible for the movement unit to be moved by means of suitable devices, such as rollers, wheels etc, on a guide system (16) arranged above the floor.

34. Transport system according to one of Claims 1 to 32, **characterized in that** the transport vehicle (1) is designed as a floor vehicle, for example a thrust platform, it being possible for the movement unit (3) to be self-propelled or driven externally on the floor.

35. Transport system according to one of Claims 1 to 34, **characterized in that** the holding device (4) or the component (6) can be transferred or accepted by the lifting and lowering device (2) in a transfer position in at least one station (21), at least one centring device being provided in the transfer position and/or on the holding device (4) or on the component (6), for determining the position of the holding device (4) or of the component (6) in the station (21).

36. Transport system according to Claim 35, **characterized in that** the holding device (4) or the component (6) can be lifted or lowered substantially vertically for the transfer or acceptance, and the centring device is correspondingly aligned vertically.

37. Transport system according to Claim 35, **characterized in that** the holding device (4) or the component (6) can be lifted or lowered substantially obliquely or in a curved shape for the transfer or acceptance, and the centring device is correspondingly aligned obliquely.

## Revendications

1. Installation de transport pour transporter des éléments de structure (6), de préférence des carrosseries de véhicule, entre une pluralité de postes (21), de préférence, des postes de fabrication, le long d'une piste de transport (20), le long de laquelle une pluralité d'éléments de structure (6) peuvent être transportés, à l'aide d'une pluralité de véhicules de transport (1), les véhicules de transport (1) présentant au moins une unité de déplacement (3), au moins un dispositif support (4) pour supporter les éléments de structure (6) et au moins un dispositif de levage, respectivement d'abaissement (2) pour lever et/ou abaisser le dispositif support (4), dispositif de levage, respectivement d'abaissement (2) formé d'au moins un entraînement de levage (18) et d'une pluralité d'éléments de construction (7, 8), de préférence, allongés, pratiquement rigides, reliés ensemble par au moins une première articulation (9), sachant qu'au moins un premier et un deuxième élément de construction (7, 8) du dispositif de levage, respectivement d'abaissement (2), sont disposés en forme de Y en au moins une position de levage, **caractérisée en ce que** chaque fois une première extrémité de ces deux éléments de construction (7, 8) est reliée, par une deuxième et une troisième articulation (9), à l'unité de déplacement (3), **en ce que** la deuxième extrémité du premier élément de construction (7) est reliée au dispositif support (4), par une quatrième articulation (9), et **en ce que** la deuxième extrémité du deuxième élément de construction (8) est montée à rotation, entre les deux extrémités du premier élément de construction (7), sur celui-ci, par la première articulation (9), et **en ce que** la première extrémité d'un des deux éléments de construction (7, 8) est disposée de façon déplaçable, pouvant tourner, en étant guidée, dans un dispositif de guidage (5), et **en ce que** le point d'action de levage (H) de l'entraînement de levage (18) est disposé sur le dispositif support (4), ou à proximité d'un point d'articulation (A) du dispositif support (4), sur un élément de construction (7, 8), relié au dispositif support (4), de préférence dans la plage de 0 à 50 %, de préférence dans la plage de 0 à 25 % de la longueur de l'élément de construction le plus long, relié au dispositif support (4).

2. Installation de transport selon la revendication 1, **caractérisée en ce que** la première extrémité du premier élément de construction (7) est disposée, de façon déplaçable et en pouvant tourner, dans le dispositif de guidage (5).

3. Installation de transport selon la revendication 1 ou 2, **caractérisée en ce que** l'un des éléments de construction (7, 8) est plus long que l'autre élément de construction.

4. Installation de transport selon la revendication 3, **caractérisée en ce que** l'élément de construction long présente sensiblement une longueur double celle de l'élément de construction court.

5. Installation de transport selon la revendication 3 ou 4, **caractérisée en ce que** l'élément de construction court est relié de façon articulée, sensiblement au centre de l'élément de construction long, à l'élément de construction long.

6. Installation de transport selon l'une des revendications 3 à 5, **caractérisée en ce que** le premier élément de construction (7) est l'élément de construction long.

7. Installation de transport selon l'une des revendications 1 à 6, **caractérisée en ce que** le dispositif de guidage (5) est réalisé de manière que l'extrémité, reliée au dispositif support (4), du premier élément de construction (7) soit déplaçable sensiblement verticalement, au moyen de la cinématique du dispositif de levage, respectivement d'abaissement (2).

8. Installation de transport selon la revendication 1, **caractérisée en ce que** le dispositif de levage, respectivement d'abaissement (2), est réalisé avec au moins un cadre d'articulation (10, 11) en plusieurs éléments, composé d'une pluralité d'éléments de construction (12, 13), reliés de façon articulée, et du premier élément de construction (7).

9. Installation de transport selon la revendication 8, **caractérisée en ce qu'**au moins un, de préférence chacun des cadres articulés (10, 11) en plusieurs parties, est réalisé sous forme de parallélogramme, formé de quatre éléments de construction (12, 13, 14, 15) reliés ensemble de façon articulée, dont chaque fois deux éléments de construction (13, 12 et 15, 12 et 14) sont disposés sensiblement parallèles dans toutes les positions.

10. Installation de transport selon la revendication 8 ou 9, **caractérisée en ce qu'**un élément de construction d'un premier cadre articulé forme simultanément également un élément de construction d'un deuxième cadre articulé et cet élément de liaison (12) forme la liaison entre les deux cadres articulés (10, 11).

11. Installation de transport selon la revendication 10, **caractérisée en ce qu'**un élément de construction (14) d'un cadre articulé (10, 11) est relié rigidement à l'unité de déplacement (3) et, respectivement, est formé par l'unité de déplacement (3) et, sur cet élément de construction (14), les extrémités de deux autres éléments de construction (13) sont montés à rotation, sachant que les deux autres extrémités de ces éléments de construction (13) sont disposés et montés à rotation sur l'élément de liaison (12), et ces quatre éléments de construction (12, 13, 14) forment un premier cadre articulé (11).1

12. Installation de transport selon la revendication 10 ou 11, **caractérisée en ce qu'**un élément de construction (15) d'un cadre articulé (10, 11) est relié rigidement au dispositif support (4), respectivement est formé par le dispositif support (4), et, sur cet élément de construction (15), les extrémité de deux autres éléments de construction (13) sont disposés en étant montés à rotation, sachant que les deux autres extrémités de ces éléments de construction (13) sont montés à rotation sur l'élément de liaison (12) et ces quatre éléments de construction (12, 13, 15) forment un deuxième cadre articulé (10).

13. Installation de transport selon l'une des revendications 8 à 12, **caractérisée en ce que** la première extrémité du premier élément de construction (7) est disposée, de façon déplaçable de façon guidée et de façon pouvant tourner, dans le dispositif de guidage (5) et l'autre extrémité du premier élément de construction (7) est reliée à un élément de construction (12, 13) d'un cadre articulé (10, 11), respectivement est reliée au dispositif support (4).

14. Installation de transport selon la revendication 13, **caractérisée en ce que** le premier élément de construction (7) est simultanément au moins partiellement un élément de construction (13) d'un cadre articulé (10, 11).

15. Installation de transport selon l'une des revendications 8 à 14, **caractérisée en ce que** le premier élément de construction (9) est plus long que l'élément de construction le plus long des deux cadres articulés (10, 11).

16. Installation de transport selon la revendication 15, **caractérisée en ce que** le premier élément de construction (7) est deux fois de la longueur de l'élément de construction le plus long du cadre articulé (10, 11).

17. Installation de transport selon l'une des revendications 14 à 16, **caractérisée en ce qu'**une extrémité de l'élément de liaison (12) est disposée de façon à tourner entre les deux extrémités du premier élément de construction (7), sur le premier élément de construction (7).

18. Installation de transport selon la revendication 17, **caractérisée en ce qu'**une extrémité de l'élément de liaison (12) est disposée de façon à pouvoir tourner entre les deux extrémités, sensiblement au centre du premier élément de construction (7), sur le premier élément dé construction (7).

19. Installation de transport selon l'une des revendications 1 à 18, **caractérisée en ce que** les éléments de construction (13, 14, 15), l'élément de liaison (12) et/ou le premier élément de construction (7) sont réalisés au moins partiellement sous forme de barres, formées, de préférence, à partir de tubes, de tubes de forme ou de profilés.

20. Installation de transport selon la revendication 1, **caractérisée en ce qu'**au moins une première partie du dispositif de levage et d'abaissement (2) est réalisée sous la forme de mécanisme à ciseau (22) en forme de X, connu depuis longtemps, et, à celui-ci, se raccorde une deuxième partie (23) en forme de Y, construite à partir d'un premier et d'un deuxième élément de construction (7, 8), du dispositif de levage et d'abaissement (2), sachant qu'au moins un élément de construction, de préférence un éléments de construction du mécanisme à ciseau en forme de X (22), du dispositif de levage et d'abaissement (2), est monté de façon à pouvoir se déplacer en étant guidé dans un dispositif de guidage (5).

21. Installation de transport selon la revendication 20, **caractérisée en ce qu'**une pluralité d'éléments de construction sont réalisés sous la forme de cadres articulés en forme de parallélogramme.

22. Installation de transport selon la revendication 21, **caractérisée en ce qu'**un cadre articulé est relié au dispositif support (4).

23. Installation de transport selon la revendication 21 ou 22, **caractérisée en ce qu'**un cadre articulé fait partie du mécanisme à ciseau en forme de X (22).

24. Installation de transport pour transporter des éléments de structure (6), de préférence des carrosseries de véhicule, entre une pluralité de postes (21), de préférence, des postes de fabrication, le long d'une piste de transport (20), le long de laquelle une pluralité d'éléments de structure (6) peuvent être transportés, à l'aide d'une pluralité de véhicules de transport (1), les véhicules de transport (1) présentant au moins une unité de déplacement (3), au moins un dispositif support (4) pour supporter les éléments de structure (6) et au moins un dispositif de levage, respectivement d'abaissement (2) pour lever et/ou abaisser le dispositif support (4), dispositif de levage, respectivement d'abaissement (2) formé d'au moins un entraînement de levage (18) et d'une pluralité d'éléments de construction (7, 8), de préférence, allongés, pratiquement rigides, reliés ensemble par au moins une première articulation (9), sachant qu'au moins un premier et un deuxième élément de construction (7, 8) du dispositif de levage, respectivement d'abaissement (2), sont disposés en forme de Y en au moins une position de levage, **caractérisé en ce que** le deuxième élément de construction (8) du dispositif de levage, respectivement d'abaissement (2) est réalisé sous la forme de premier dispositif de guidage, dont une première extrémité est fixée rigidement à l'unité de déplacement (3), et dans lequel au moins un premier point (V), pouvant être prédéterminé, du premier élément de construction (7) est monté, de façon déplaçable de façon guidée et de façon à pouvoir tourner, entre les deux extrémités du premier dispositif de guidage (8), **en ce qu'**une première extrémité du premier élément de construction (7) est déplaçable de façon guidée et montée à rotation dans un deuxième dispositif de guidage (5), disposé sur l'unité de déplacement (3), et la deuxième extrémité du premier élément de construction (7) est reliée au dispositif support (4) par une deuxième articulation (9), et **en ce que** le point d'action de levage (H) de l'entraînement de levage (18) est disposé sur le dispositif support (4), ou à proximité d'un point d'articulation (A) du dispositif support (4), sur un élément de contact (7, 8) relié au dispositif support (4), de préférence, dans la plage de 0 à 50 %, en particulier dans la plage de 0 à 25 % de la longueur du plus long élément construction relié au dispositif support (4).

25. Installation de transport selon la revendication 24, **caractérisée en ce que** le dispositif de levage, respectivement d'abaissement (2), est réalisé avec au moins un cadre articulé (10) en plusieurs éléments, formé d'une pluralité d'éléments de construction (13), reliés ensemble de façon articulée, et du premier élément de construction (7), le premier élément de construction (7) faisant, le cas échéant, partie du cadre articulé (10).

26. Installation de transport selon la revendication 25, **caractérisée en ce que** le premier élément de construction (7) est relié de façon articulée au cadre articulé (10).

27. Installation de transport selon la revendication 25 ou 26, **caractérisée en ce que** le cadre articulé (10) est relié au dispositif support (4).

28. Installation de transport selon l'une des revendications 24 à 27, **caractérisée en ce que** le premier dispositif de guidage (8) est orienté sensiblement verticalement ou obliquement, et le deuxième dispositif de guidage (5) est orienté sensiblement horizontalement ou obliquement.

29. Installation de transport selon l'une des revendications 1 à 28, **caractérisée en ce que** les dispositifs de guidage (5, 8) sont réalisés au moins partiellement sous forme de guidage linéaire.

30. Installation de transport selon l'une des revendications 1 à 29, **caractérisée en ce que** l'unité de déplacement (3) est munie de dispositifs pour assurer le déplacement du véhicule de transport (1), par exemple des roues, des galets, des dispositifs d'entraînement, des unités de commande, etc.

31. Installation de transport selon l'une des revendications 1 à 30, **caractérisée en ce que** l'entraînement de levage (18) est réalisé sous la forme d'entraînement à câble, d'entraînement à chaîne, d'entraînement à tige filetée, d'entraînement à crémaillère, de vérin hydraulique ou de vérin pneumatique

32. Installation de transport selon l'une des revendications 1 à 31, **caractérisée en ce qu'**au moins un dispositif de levage et d'abaissement (2) est disposé des deux côtés du véhicule de transport (1) dans la direction de transport.

33. Installation de transport selon l'une des revendications 1 à 32, **caractérisée en ce que** le véhicule de transport (1) est réalisé sous la forme d'une bande de suspension, de préférence d'une bande de suspension électrique, l'unité de déplacement (3) étant déplaçable à l'aide de dispositifs appropriés, tels que, par exemple, des galets, des roues, etc., sur un système de guidage (16) disposé au-dessus du sol.

34. Installation de transport selon l'une des revendications 1 à 32, **caractérisée en ce que** le véhicule de transport (1) est réalisé sous la forme de véhicule évoluant au sol, par exemple d'une plate-forme coulissante, l'unité de déplacement (3) étant déplaçable au sol, de façon autonome ou sous l'effet d'une propulsion extérieure.

35. Installation de transport selon l'une des revendications 1 à 34, **caractérisée en ce que** le dispositif support (4) ou l'élément de structure (6) est susceptible d'être transféré ou pris en charge en au moins un poste (21), en une position de transfert, par le dispositif de levage, respectivement d'abaissement (2), sachant qu'à la position de transfert et/ou sur le dispositif de support (4), respectivement sur l'élément de structure (6), est prévu au moins un dispositif de centrage, pour la détermination de position du dispositif support (4), respectivement de l'élément de structure (6), dans le poste (21).

36. Installation de transport selon la revendication 35, **caractérisée en ce que** le dispositif support (4), respectivement l'élément de structure (6), est levable ou abaissable sensiblement verticalement, pour assurer le transfert ou la prise en charge, et le dispositif de centrage est orienté verticalement de manière correspondante.

37. Installation de transport selon la revendication 35, **caractérisée en ce que** le dispositif support (4), respectivement l'élément de structure (6), est susceptible d'être levé ou abaissé, sensiblement obliquement ou selon une trajectoire courbe, pour assurer le transfert, respectivement la prise en charge, et le dispositif de centrage est orienté également selon une obliquité correspondante.
